# EUROPEAN PATENT SPECIFICATION

(11) **EP 2 548 103 B1**
(45) Date of publication and mention of the grant of the patent: **14.08.2019**
(21) Application number: 11712673.0
(22) Date of filing: 17.02.2011
(51) Int. Cl.: G06F 3/038, G06F 3/0346, G06F 3/0354

(54) **POINTER DEVICE TO NAVIGATE A PROJECTED USER INTERFACE**
ZEIGEVORRICHTUNG ZUR NAVIGATION DURCH EINE PROJIZIERTE BENUTZERSCHNITTSTELLE
DISPOSITIF PERMETTANT DE PARCOURIR UNE INTERFACE UTILISATEUR PROJETÉE

(30) Priority: 17.03.2010 US 725841
(43) Date of publication of application: 23.01.2013
(73) Proprietor: Sony Mobile Communications AB, 221 88 Lund (SE)
(72) Inventor: ARONSSON, Pär-Anders, S-214 24 Malmö (SE); BACKLUND, Erik, S-253 73 Gantofta (SE); KRISTENSSON, Andreas, S-211 28 Malmö (SE)
(74) Representative: Aera A/S
(86) International application number: PCT/IB2011/050673
(87) International publication number: WO 2011/114244

(56) References cited:
- WO-A1-01/03106
- WO-A1-2009/156499
- US-A1- 2008 180 395
- US-A1- 2009 153 671

## Description

### BACKGROUND

With the development of user devices, such as mobile phones and personal digital assistants (PDAs), users may access and exchange information anywhere and anytime. Unfortunately, certain design constraints exist with respect to these user devices. For example, the size of the display of the user device is relatively small in comparison to the size of a computer monitor or a television. Thus, the size of the user interface displayed to the user is correspondingly limited.

WO 01/03106 A1 discloses a method for remotely controlling a computer having an associated screen for displaying output from the computer and having an internal cursor generated by the computer including detecting at least one property of an external cursor. In one embodiment, the invention includes a computer connected to a projector, which projects an image of the computer onto an external screen. A camera is used to capture the image of the projected computer output. An optical pointer, such as a laser pointer, is used to generate and transmit an external cursor having various properties, such as color, shape, or intensity. The image captured by the camera is used to detect and process at least one property of the external cursor to generate a corresponding command or commands to control the computer. Commands may be used to emulate control of the computer typically provided by a pointing device such as a mouse or track ball.

US 2008/180395 A1 discloses a computer pointing input device, which allows a user to determine the position of a cursor on a computer display. The position of the input device in relation to the display controls the position of the cursor, so that when a user points directly at the display, the cursor appears at the intersection of the display and the line of sight from of the input device. When the device is moved, the cursor appears to move on the display in exact relation to the input device. In addition, a cursor command unit allows the user to virtually operate the input device wherein changes in the position of the device allow the user to spatially invoke mouse functions. The computer pointing input device is designed to operate with a computer having a processor through a computer communication device.

### SUMMARY

The present invention provides a method according to claim 1 and an apparatus according to claim 8. Further aspects of the invention are outlined in the dependent claims. Embodiments which do not fall within the scope of the claims do not describe part of the present invention.

According to an exemplary implementation, a method may include projecting a content associated with a user device; receiving, by the user device, a projected content including an invisible cursor content; determining a position of the invisible cursor content with respect to the projected content; outputting, by the user device, a visible cursor having a position in correspondence to the invisible cursor; receiving, by the user device, an input from a pointer device; mapping, by the user device, a position of a visible cursor content to the content; and performing, by the user device, an input operation that interacts with the content and corresponds to the input from the pointer device and the position of the visible cursor content.

Additionally, the method may include receiving, by the pointer device, the input; and
transmitting, by the pointer device, the input to the user device, wherein the pointer device corresponds to an infrared laser pointer device.

Additionally, the determining may include detecting an illumination level associated with the invisible cursor content; and comparing the illumination level with other illumination levels associated with coordinates of the projected content.

Additionally, the method may include performing a calibration to calculate a translation between a coordinate space associated with the projected content and a coordinate space associated with the content.

Additionally, the mapping may include mapping one or more coordinates of the position of the invisible cursor content to a corresponding one or more coordinates of the content.

Additionally, the input operation may correspond to one of scrolling, selecting, highlighting, dragging-and-dropping, a multi-touch operation, or navigating within a menu.

Additionally, the content may correspond to one of a user interface of the user device or content accessible by the user device.

Additionally, the method may include outputting, by the user device, a calibration image.

Additionally, the determining may include recognizing a user's gesture based on a positional path associated with the invisible cursor content.

According to another exemplary implementation, a user device may comprise components configured to receive a projected content including an invisible cursor content, wherein the projected content corresponds to a content associated with the user device; determine a position of the invisible cursor content with respect to the projected content; output a visible cursor having a position in correspondence to the invisible cursor; receive a user input from a pointer device; map a position of a visible cursor content to the content; and perform an input operation that interacts with the content, wherein the input operation corresponds to the user input and the position of visible cursor content.

Additionally, the user device may comprise a radio telephone and a display capable of displaying the content.

Additionally, the user device may further comprise at least one of a projector or a camera capable of detecting infrared light and visible light, and wherein the visible cursor is partially transparent.

Additionally, wherein when determining, the components may be further configured to detect at least one of an illumination level associated with the invisible cursor content, a frequency associated with the invisible cursor content, or a positioning path associated with the invisible cursor content.

Additionally, wherein the components may be further configured to remove noise based on a Kalman filter or a low-pass filter to stabilize the position of the visible cursor.

Additionally, wherein the components may be further configured to receive a projected content corresponding to a calibration image; and map a coordinate space between the projected content corresponding to the calibration image and a content associated with the user device.

Additionally, wherein the input operation may correspond to one of scrolling, selecting, highlighting, dragging-and-dropping, a multi-touch operation, or navigating within a menu.

Additionally, wherein the content may correspond to one of a user interface of the user device or content accessible by the user device.

According to yet another exemplary implementation, a computer-readable medium may include instructions executable by at least one processing system. The computer-readable medium may storing instructions to receive a projected content including an infrared laser cursor content, wherein the projected content corresponds to a user interface associated with the user device; determine a position of the infrared laser cursor content with respect to the projected content; project a visible cursor having a position in correspondence to the infrared laser cursor content; receive a user input from a pointer device; map the position of the infrared laser cursor content to the user interface; and perform an input operation that interacts with the user interface, wherein the input operation corresponds to the user input and the position of infrared laser cursor content.

Additionally, the computer-readable medium may further store one or more instructions to detect at least one of an illumination level associated with the infrared laser cursor content or a frequency associated with the infrared laser cursor content, in combination with a size of the infrared laser cursor content; and filter a spectrum associated with the received projected content based on the frequency.

Additionally, wherein the user device in which computer-readable medium resides may comprise a radio telephone, and the input operation may correspond to one of scrolling, selecting, highlighting, dragging-and-dropping, a multi-touch operation, or navigating within a menu.

### BRIEF DESCRIPTION OF THE DRAWINGS

The accompanying drawings, which are incorporated in and constitute a part of this specification, illustrate exemplary embodiments described herein and, together with the description, explain these exemplary embodiments. In the drawings:
Fig. 1A is a diagram illustrating an exemplary environment in which an exemplary embodiment of user navigation using a projected user interface and a pointer device may be implemented;
Figs. 1B - IF are diagrams illustrating exemplary operations that may be performed according to an exemplary embodiment of user navigation using a projected user interface and a pointer device;
Fig. 2 is a diagram illustrating an exemplary user device in which exemplary embodiments described herein may be implemented;
Fig. 3 is a diagram illustrating exemplary components of the user device;
Fig. 4 is a diagram illustrating exemplary functional components of the user device;
Fig. 5 is a diagram illustrating an exemplary pointer device;
Fig. 6 is a diagram illustrating exemplary components of the pointer device;
Figs. 7A - 7C are diagrams illustrating an exemplary scenario in which multi-touch operations may be performed using the pointer device and the user device; and
Figs. 8A and 8B are flow diagrams illustrating an exemplary process for providing user navigation via a projected user interface and a pointer device.

### DETAILED DESCRIPTION

The following detailed description refers to the accompanying drawings. The same reference numbers in different drawings may identify the same or similar elements. Also, the following description does not limit the invention, which is defined by the claims.

The term "user interface," as used herein is intended to be broadly interpreted to include a user interface of a user device, a user interface of another device communicatively coupled to the user device, or content accessible by the user device (e.g., Web content, etc.).

### OVERVIEW

According to an exemplary embodiment, a user may interact with and navigate through a user interface using a pointer device, a projected user interface, and a camera. According to an exemplary process, the user interface of the user device may be projected by a projector on a surface (e.g., a screen, a wall, etc.). The user may interact with the projected user interface using the pointer device. According to an exemplary embodiment, the pointer device emits an invisible laser beam. For example, the pointer device may correspond to an infrared (IR) pointer device or an ultraviolet pointer device. The projected user interface and an invisible cursor created by the invisible laser beam may be captured by the camera. The camera may provide the user interface image to the user device. The user device may detect the position of the invisible cursor and generate a visible cursor that may be output to the projector and projected by the projector.

According to an exemplary embodiment, the user device may generate the visible cursor having particular characteristics (e.g., shape, design, size, and/or transparency). These characteristics may be configured by the user on the user device. By way of example, but not limited thereto, the visible cursor may have a particular transparency so that the visible cursor does not obscure an underlying portion of the user interface. For example, the visible cursor may be partially transparent or translucent. This is in contrast to a red pointer device or some other type of pointer device that emits visible light and provides a visible cursor that obscures an underlying portion of the user interface, or the intensity, speckle effect, etc., makes it difficult for the user to focus on the item to which the user is pointing. Additionally, or alternatively, by way of example, but not limited thereto, the visible cursor may take the form of various shapes or designs, such as, cross-hairs, a pointer, a finger, etc. Additionally, or alternatively, by way of example, but not limited thereto, the user device may generate the visible cursor to have a particular size. For example, the size of the cursor may be reduced to provide the user with greater precision when selecting an object, etc., from the user interface. Additionally, or alternatively, the size of the cursor may be dynamically reduced depending on how long the visible cursor resides over a particular area of the user interface. For example, the visible cursor may be reduced dynamically, in an incremental fashion, after a period of time has transpired. This is in contrast to pointer devices that emit visible light and provide a variable cursor size depending on the user's proximity to the projected image.

According to an exemplary embodiment, the visible cursor may be used by the user to interact with the user interface. The pointer device may comprise various input mechanisms (e.g., buttons, a scroll wheel, a switch, a touchpad, etc.) that may be communicated to the user device to allow the user to navigate and/or interact with the user interface associated with the user device.

According to an exemplary implementation, the pointer device may correspond to an Infrared (IR) pointer device. In other implementations, the pointer device may emit some other spectrum of light (e.g., ultraviolet), which is invisible to the human eye. In such an implementation, the laser beam and the cursor may be invisible to the user (and others). This is in contrast to, for example, a red pointer device or some other pointer device (e.g., green, blue, yellow, etc.)), which produces a visible cursor that may be distracting to the user (and others) (e.g., because of the intensity and/or speckle effect) and may obscure an underlying portion of the projected image.

According to an exemplary implementation, the pointer device may comprise one or multiple input mechanisms (e.g., buttons, a scroll wheel, a switch, a touchpad, etc.). By way of example, but not limited thereto, the pointer device may comprise one or multiple buttons to allow the user to interact with and navigate through the user interface. Additionally, according to an exemplary implementation, the pointer device may comprise pressure detector(s). The pressure detector(s) may operate in conjunction with the one or multiple buttons to allow for different user interaction and user navigation functionality. Further, according to an exemplary implementation, the pointer device may comprise an anti-shake component (e.g., a gyroscope, an accelerometer, etc.). Still further, according to an exemplary implementation, the pointer device may emit a laser beam at varying levels of luminosity in correspondence to a coding method with which the user may interact and navigate.

According to an exemplary implementation, the projector may correspond to a conventional projector. The projector may project the user interface of the user device onto a surface, such as, for example, a wall, a screen, or the like. The camera may capture the projected image of the user interface. In addition, the camera may capture the cursor image associated with the pointer device and the cursor image generated by the user device.

The user device may correspond to a variety of mobile, portable, handheld, or stationary devices. According to some of the exemplary embodiments, the user device may comprise the camera and/or the projector. According to other exemplary embodiments, the user device may not comprise the camera and/or the projector. That is, the camera and/or the projector may be devices internal to the user device or external to the user device.

As previously described, the user device responds to the user's interaction with the pointer device and the cursor (e.g., the visible cursor) on the projected user interface. According to an exemplary implementation, the camera may provide the captured images to the user device, which in turn, may interpret the captured images and appropriately respond to the user's interaction.

### EXEMPLARY ENVIRONMENT

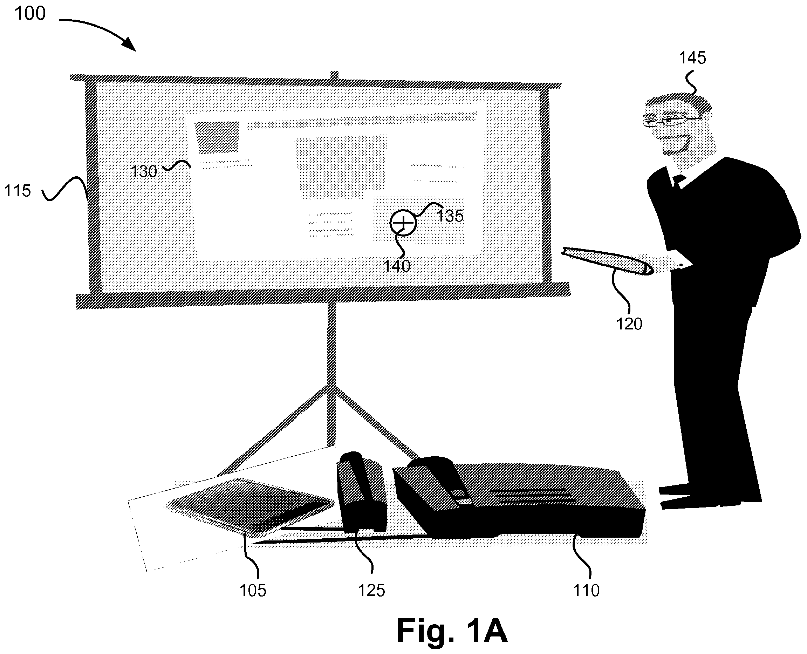

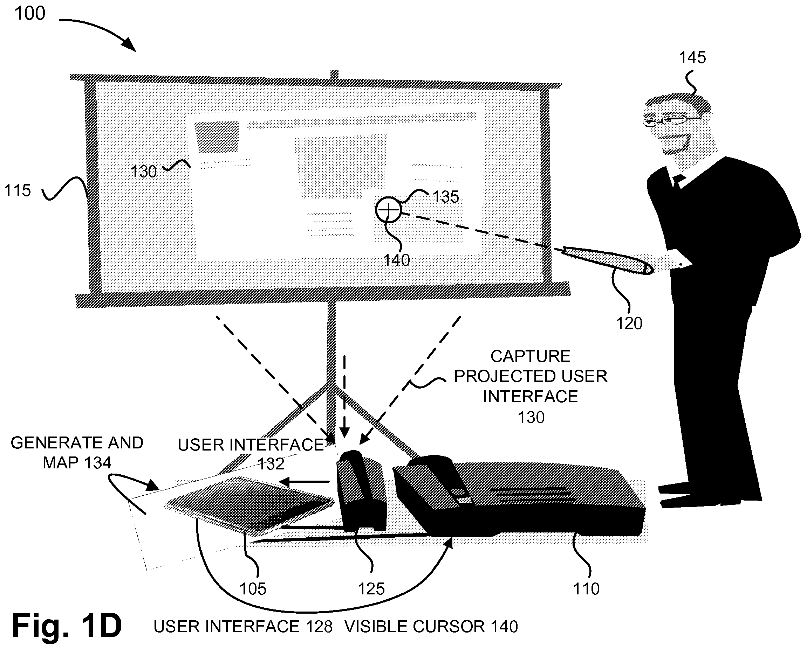

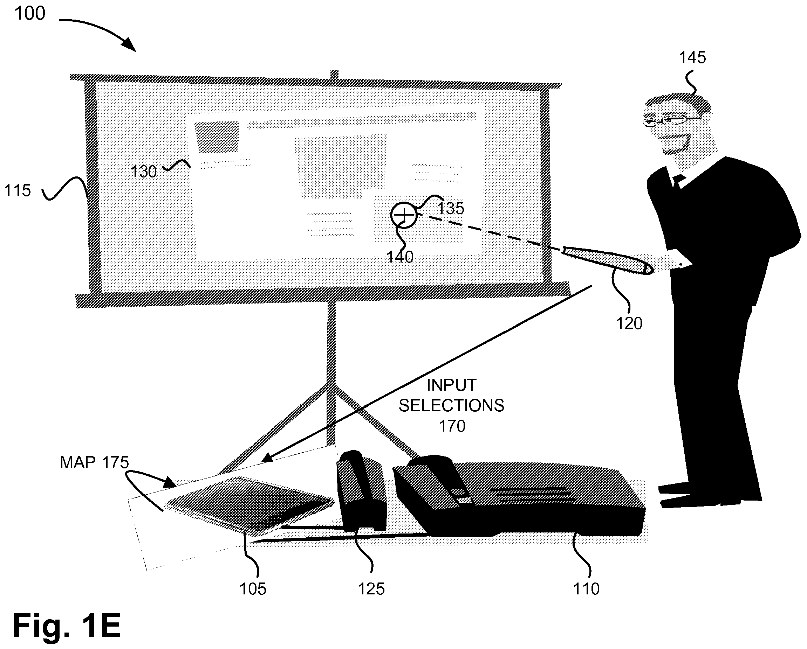

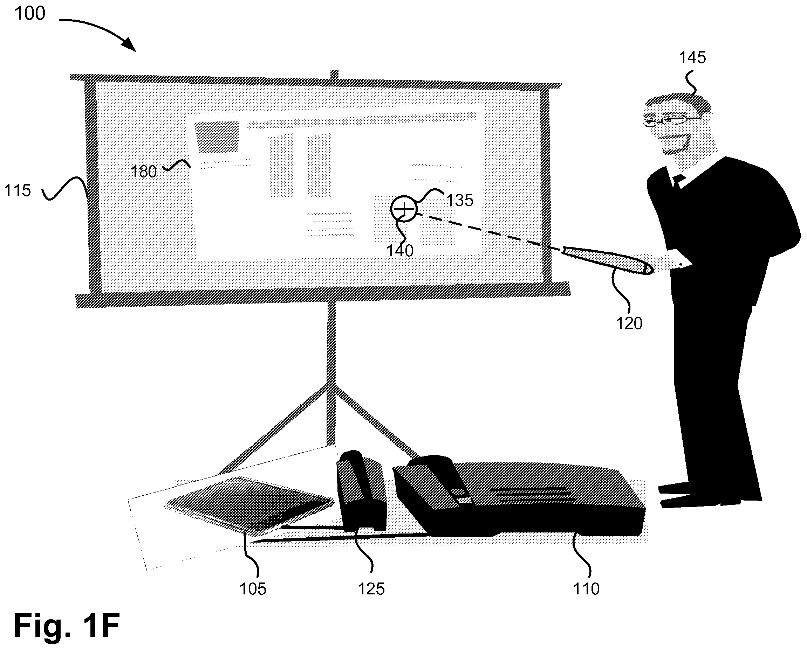

Fig. 1A is a diagram of an exemplary environment 100 in which one or more exemplary embodiments described herein may be implemented. As illustrated in Fig. 1A, environment 100 may include a user device 105, a projector 110, a screen 115, a pointer device 120, a camera 125, a projected user interface 130, an invisible cursor 135, a visible cursor 140, and a user 145. Environment 100 may include wired and/or wireless connections among the devices illustrated.

The number of devices and configuration in environment 100 is exemplary and provided for simplicity. In practice, environment 100 may include more devices, fewer devices, different devices, and/or differently arranged devices than those illustrated in Fig. 1A. For example, user device 105 may comprise projector 110 and/or camera 125. Additionally, or alternative, in other exemplary embodiments, environment 100 may not include screen 115. For example, projected user interface 130 may be projected on a wall or some surface (e.g., a flat surface). In addition to the number of devices and configuration, some functions described as being performed by a particular device may be performed by a different device or a combination of devices. By way of example, but not limited thereto, pointer device 120 and/or camera 125 may perform one or more functions that is/are described as being performed by user device 105.

User device 105 may correspond to a portable device, a mobile device, a handheld device, or a stationary device. By way of example, but not limited thereto, user device 105 may comprise a telephone (e.g., a smart phone, a cellular phone, an Internet Protocol (IP) telephone, etc.), a PDA device, a data organizer device, a Web-access device, a computer (e.g., a tablet computer, a laptop computer, a palmtop computer, a desktop computer), and/or some other type of user device.

As previously described, according to an exemplary implementation, user device 105 may determine the position of invisible cursor 135 with respect to projected user interface 130. User device 105 may generate visible cursor 140. User device 105 may comprise a mapping function, which will be described further below, so that visible cursor 140 is projected onto screen 115 in the determined position of invisible cursor 135. User 145 may navigate and interact with the user interface associated with user device 105, and user device 105 may correspondingly respond.

Projector 110 may comprise a device having the capability to project images. For example, projector 110 may include a micro-electromechanical projection system (MEMS) (e.g., a digital micro-mirror device (DMD) component, digital light processing (DLP) component, or a grating light valve (GLV) component). In another implementation, projector 110 may include, for example, a liquid crystal display (LCD) projection system, a liquid crystal on silicon (LCOS) projection system, or some other type of projection system. Projector 110 may include a transmissive projector or a reflective projector.

Projector 110 may provide for various user settings, such as color, tint, resolution, etc. Projector 110 may also permit user 145 to identify other parameters that may affect the quality of the projected content. For example, user 145 may indicate the color of the surface, the type of surface (e.g., a screen, a wall, etc.) on which content will be projected; a type of light in the environment, the level of light in the environment, etc.

Screen 115 may comprise a surface designed to display projected images. Screen 115 may be designed for front or back projection.

Pointer device 120 may comprise a device having the capability to emit light. According to an exemplary implementation, pointer device 120 may emit light invisible to user 145 (e.g., IR light or ultraviolet light). According to an exemplary implementation, pointer device 120 may comprise a laser pointer device. According to other exemplary implementations, pointer device 120 may comprise a different type of device that emits invisible light (e.g., a flash light that includes an adjustable focus). Pointer device 120 may comprise one or more input mechanisms (e.g., buttons, a scroll wheel, a switch, a touchpad, etc.). According to an exemplary implementation, the button(s) may comprise pressure-sensitive detectors to detect the pressure associated with user's 145 pressing of the button(s). As described further below, the input mechanism(s) may allow user 145 to emulate mouse-like inputs, single touch inputs, and/or multi-touch inputs. Pointer device 120 may comprise a communication interface to allow pointer device 120 to communicate with user device 105.

According to an exemplary implementation, pointer device 120 may include an anti-shake component. By way of example, but not limited thereto, the anti-shake component may include one or more gyroscopes, accelerometers, and/or another component to detect and compensate for unintentional shaking and/or angular movements caused by user 145. Additionally, or alternatively, pointer device 120 may include a gesture detector. By way of example, but not limited thereto, the gesture detector may comprise one or more gyroscopes, accelerometers, and/or some other type of in-air gesture technology. In other implementations, pointer device 120 may not include the gesture detector and/or the anti-shake component.

Camera 125 may comprise a device having the capability to capture images. The images may include visible light and invisible light (e.g., IR light or ultraviolet light). For example, camera 125 may capture projected user interface 130, invisible cursor 135, and a visible cursor (not illustrated). Camera 125 may provide for various user settings (e.g., lighting conditions, resolutions, etc.).

Projected interface 130 may correspond to a user interface associated with user device 105. Invisible cursor 135 may correspond to invisible light emitted from pointer device 120 that impinges screen 115. Visible cursor 140 may correspond to a cursor generated by user device 105, which is projected by projector 110 onto screen 115.

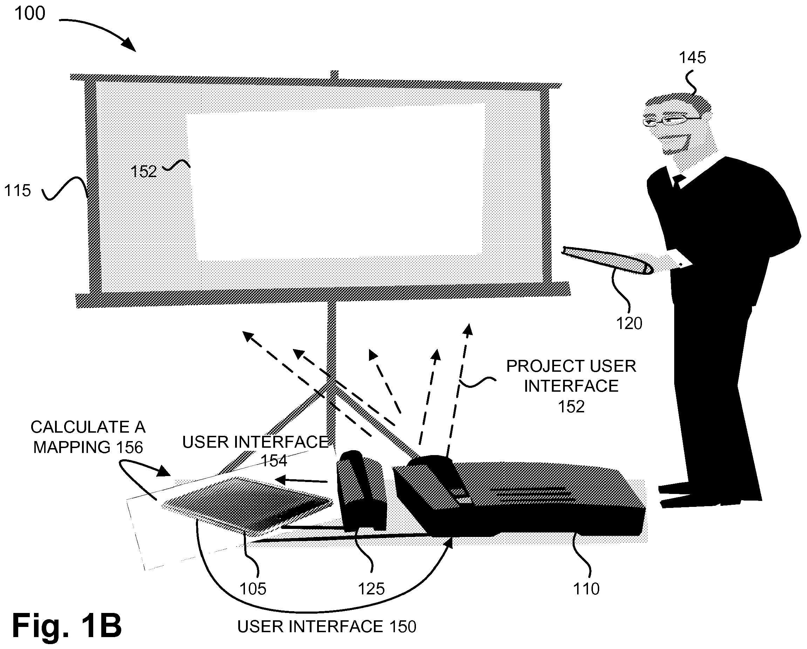

Figs. 1B - IF are diagrams illustrating exemplary operations that may be performed according to an exemplary embodiment of user navigation using a projected user interface and a pointer device. Referring to Fig. 1B, according to an exemplary implementation, user device 105 may perform a calibration process. The calibration process may assist user device 105 to generate a mapping of coordinate spaces between projected user interface 130 and the user interface of user device 105. As illustrated, user device 105 may output a user interface 150 to projector 110. According to an exemplary implementation, user interface 150 may correspond to a default calibration image (e.g., a rectangular image or some other type of image). In other implementations, user interface 142 may correspond to a user interface produced by user device 105 during normal operation (e.g., a desktop image, etc.). Projector 110 may project a user interface 152 to screen 115. Camera 125 may capture user interface 152 from screen 115 and provide a user interface 154 to user device 105. User device 105 may calculate a mapping 156 of coordinate spaces between user interface 150 and user interface 154.

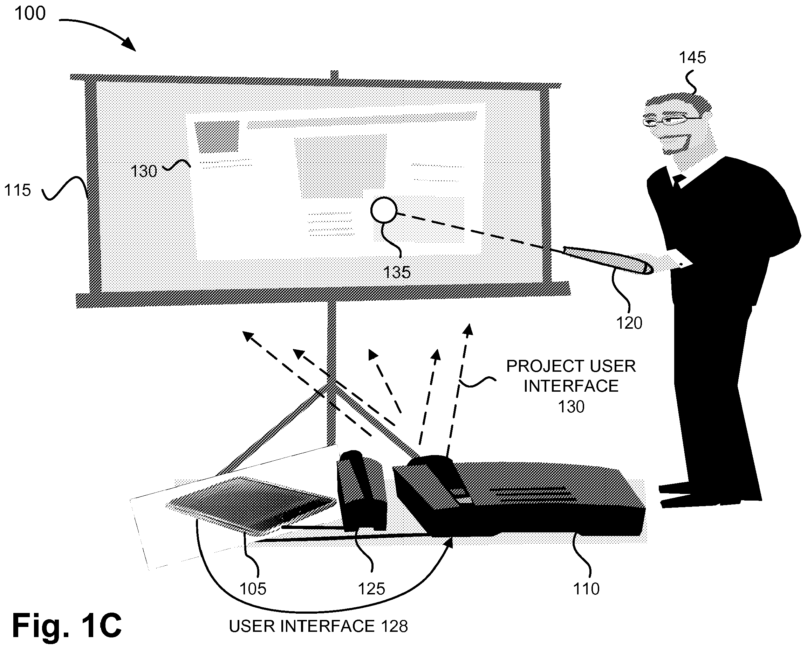

Referring to Fig. 1C, it may be assumed that calibration was successful and user 145 begins to navigate through projected user interface 130. As illustrated, user device 105 may provide a user interface 128 to projector 110. Projector 110 may project user interface 130 onto screen 115. User 145 may point pointer device 120 toward projected user interface 130 causing invisible cursor 135 to be present on projected user interface 130. As illustrated in Fig. ID, camera 125 may capture projected user interface 130 that includes invisible cursor 135 and provide a user interface 132 to user device 105. User device 105 may generate and map 134 the visible cursor 140. User device 105 may send user interface 128 and visible cursor 140 to projector 110. Projector 110 may project visible cursor 140 and user interface 128 onto screen 115. User device 105 may continuously perform this process so that visible cursor 140 is projected in a position that corresponds to a position of invisible cursor 135. In this way, visible cursor 140 may track or have a position that corresponds to or substantially corresponds to the position of invisible cursor 135.

Referring to Fig. IE, user 145 may make particular input selections 170 into pointer device 120 (e.g., user 145 may press some buttons, etc.) while visible cursor 140 is positioned on a particular spot with respect to projected user interface 130. Input selections 170 may be sent to user device 105. Camera 125 may capture projected user interface 130, invisible cursor 135, and visible cursor 140. Camera 125 may provide this image to user device 105. User device 105 may map 175 the position of visible cursor 140 to a user interface space and interpret input selections 170. In this example, user device 105 may cause a new projected user interface 180 to be projected on screen 115, as illustrated in Fig. IF.

### EXEMPLARY USER DEVICE

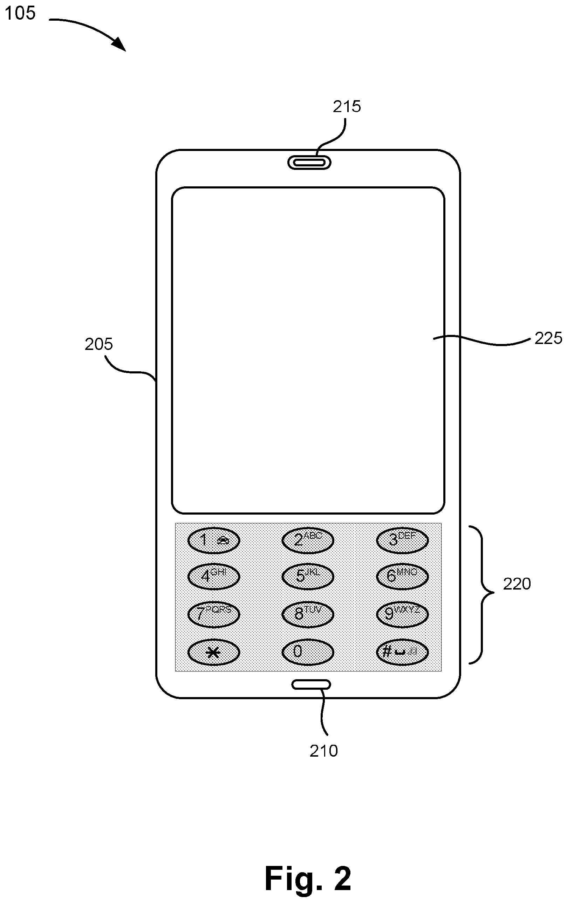

Fig. 2 is a diagram of an exemplary user device 105 in which exemplary embodiments described herein may be implemented. As illustrated in Fig. 2, user device 105 may comprise a housing 205, a microphone 210, speakers 215, keys 220, and a display 225. In other embodiments, user device 105 may comprise fewer components, additional components, different components, and/or a different arrangement of components than those illustrated in Fig. 2 and described herein. By way of example, but not limited thereto, in other embodiments user device 105 may not comprise microphone 210, speakers 215, and/or keys 220. Additionally, or alternatively, by way of example, but not limited thereto, in other embodiments, user device 105 may comprise a camera component and/or a projector component. Additionally, or alternatively, although user device 105 is depicted as having a landscape configuration, in other embodiments, user device 105 may have a portrait configuration or some other type of configuration.

Housing 205 may comprise a structure to contain components of user device 105. For example, housing 205 may be formed from plastic, metal, or some other type of material. Housing 205 may support microphone 210, speakers 215, keys 220, and display 225.

Microphone 210 may transduce a sound wave to a corresponding electrical signal. For example, a user may speak into microphone 210 during a telephone call or to execute a voice command. Speakers 215 may transduce an electrical signal to a corresponding sound wave. For example, a user may listen to music or listen to a calling party through speakers 215.

Keys 220 may provide input to user device 105. Keys 220 may comprise a standard telephone keypad, a QWERTY keypad, and/or some other type of keypad (e.g., a calculator keypad, etc.). According to an exemplary implementation, keys 220 may comprise pushbuttons. Keys 220 may comprise special purpose keys to provide a particular function (e.g., send, call, e-mail, etc.) and/or permit a user to select, navigate, etc., objects or icons displayed on display 225.

Display 225 may operate as an output component. Additionally, in some implementations, display 225 may operate as an input component. For example, display 225 may comprise a touch-sensitive screen. In such instances, display 225 may correspond to a single-point input device (e.g., capable of sensing a single touch) or a multipoint input device (e.g., capable of sensing multiple touches that occur at the same time). Further, display 225 may implement a variety of sensing technologies, including but not limited to, capacitive sensing, surface acoustic wave sensing, resistive sensing, optical sensing, pressure sensing, infrared sensing, or gesture sensing. Display 225 may also comprise an auto-rotating function.

Display 225 may comprise a liquid crystal display (LCD), a plasma display panel (PDP), a field emission display (FED), a thin film transistor (TFT) display, or some other type of display technology. Display 225 may be capable of displaying text, pictures, and/or video. Display 225 may also be capable of displaying various images (e.g., icons, a keypad, etc.) that may be selected by a user to access various applications and/or enter data. Display 225 may operate as a viewfinder when user device 105 comprises a camera or a video capturing component.

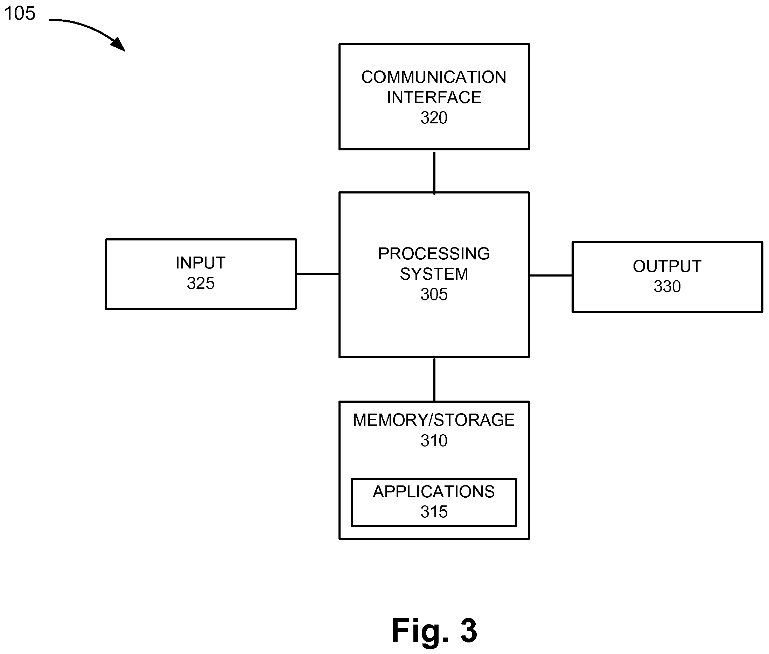

Fig. 3 is a diagram illustrating exemplary components of user device 105. As illustrated, user device 105 may comprise a processing system 305, a memory/storage 310 that may comprise applications 315, a communication interface 320, an input 325, and an output 330. In other embodiments, user device 105 may comprise fewer components, additional components, different components, or a different arrangement of components than those illustrated in Fig. 3 and described herein.

Processing system 305 may comprise one or multiple processors, microprocessors, data processors, co-processors, application specific integrated circuits (ASICs), controllers, programmable logic devices, chipsets, field programmable gate arrays (FPGAs), application specific instruction-set processors (ASIPs), system-on-chips (SOCs), and/or some other component that may interpret and/or execute instructions and/or data. Processing system 305 may control the overall operation or a portion of operation(s) performable by user device 105. Processing system 305 may perform one or more operations based on an operating system and/or various applications (e.g., applications 315).

Processing system 305 may access instructions from memory/storage 310, from other components of user device 105, and/or from a source external to user device 105 (e.g., a network or another device). Processing system 305 may provide for different operational modes associated with user device 105.

Memory/storage 310 may comprise one or multiple memories and/or one or more secondary storages. For example, memory/storage 310 may comprise a random access memory (RAM), a dynamic random access memory (DRAM), a read only memory (ROM), a programmable read only memory (PROM), a flash memory, and/or some other type of memory. Memory/storage 310 may comprise a hard disk (e.g., a magnetic disk, an optical disk, a magneto-optic disk, a solid state disk, etc.) or some other type of computer-readable medium, along with a corresponding drive. Memory/storage 310 may comprise a memory, a storage device, or storage component that is external to and/or removable from user device 105, such as, for example, a Universal Serial Bus (USB) memory stick, a hard disk, mass storage, off-line storage, etc.

The term "computer-readable medium," as used herein, is intended to be broadly interpreted to comprise, for example, a memory, a secondary storage, a compact disc (CD), a digital versatile disc (DVD), or the like. The computer-readable medium may be implemented in a single device, in multiple devices, in a centralized manner, or in a distributed manner. Memory/storage 310 may store data, application(s), and/or instructions related to the operation of device 300.

Memory/storage 310 may store data, applications 315, and/or instructions related to the operation of user device 105. Applications 315 may comprise software that provides various services or functions. By way of example, but not limited thereto, applications 315 may comprise an e-mail application, a telephone application, a voice recognition application, a video application, a multi-media application, a music player application, a visual voicemail application, a contacts application, a data organizer application, a calendar application, an instant messaging application, a texting application, a web browsing application, a location-based application (e.g., a GPS-based application), a blogging application, and/or other types of applications (e.g., a word processing application, a spreadsheet application, etc.). Applications 315 may comprise one or more applications related to the mapping function, cursor generation, cursor detection, calibration, and/or cursor stabilizer.

Communication interface 320 may permit user device 105 to communicate with other devices, networks, and/or systems. For example, communication interface 320 may comprise one or multiple wireless and/or wired communication interfaces. By way of example, but not limited thereto, communication interface 320 may comprise an Ethernet interface, a radio interface, a microwave interface, a Universal Serial Bus (USB) interface, or some other type of wireless communication interface and/or wired communication interface. Communication interface 320 may comprise a transmitter, a receiver, and/or a transceiver. Communication interface 320 may operate according to various protocols, standards, or the like.

Input 325 may permit an input into user device 105. For example, input 325 may comprise microphone 210, keys 220, display 225, a touchpad, a button, a switch, an input port, voice recognition logic, fingerprint recognition logic, a web cam, and/or some other type of visual, auditory, tactile, etc., input component. Output 335 may permit user device 105 to provide an output. For example, output 330 may comprise speakers 215, display 225, one or more light emitting diodes (LEDs), an output port, a vibratory mechanism, and/or some other type of visual, auditory, tactile, etc., output component.

User device 105 may perform operations in response to processing system 305 executing software instructions contained in a computer-readable medium, such as memory/storage 310. For example, the software instructions may be read into memory/storage 310 from another computer-readable medium or from another device via communication interface 320. The software instructions stored in memory/storage 310 may cause processing system 305 to perform various processes described herein. Alternatively, user device 105 may perform operations based on hardware, hardware and firmware, and/or hardware, software and firmware.

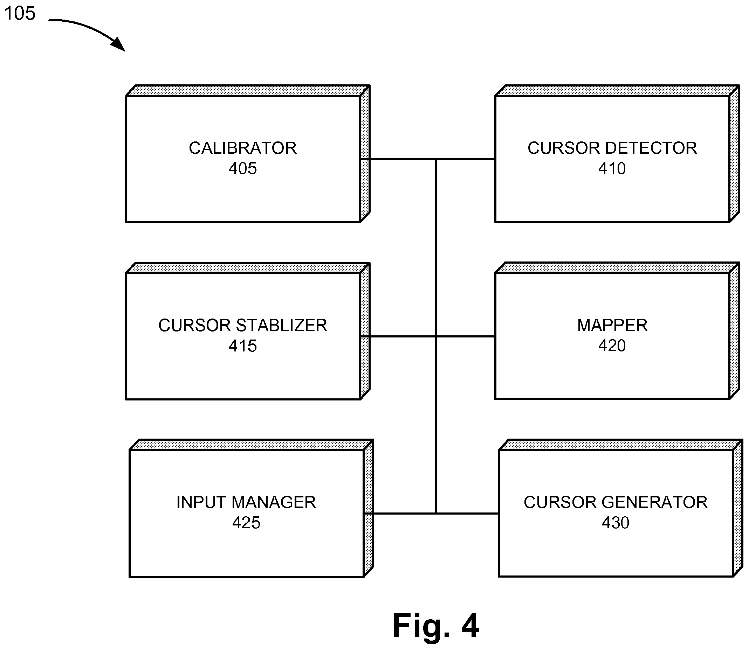

Fig. 4 is a diagram illustrating exemplary functional components of user device 105. As illustrated, user device 105 may include a calibrator 405, a cursor detector 410, a cursor stabilizer 415, a mapper 420, an input manager 425, and a cursor generator 430. Calibrator 405, cursor detector 410, cursor stabilizer 415, mapper 420, input manager 425, and/or cursor generator 430 may be implemented as a combination of hardware (e.g., processing system 305, etc.) and software (e.g., applications 315, etc.) based on the components illustrated and described with respect to Fig. 3. Alternatively, calibrator 405, cursor detector 410, cursor stabilizer 415, mapper 420, input manager 425, and/or cursor generator 430 may be implemented as hardware based on the components illustrated and described with respect to Fig. 3. Alternatively, calibrator 405, cursor detector 410, cursor stabilizer 415, mapper 420, input manager 425, and/or cursor generator 430 may be implemented as hardware or hardware and software in combination with firmware.

Calibrator 405 may interpret data received from camera 125 to translate points associated with a projected image to points associated with a user interface image of user device 105. As previously described, according to an exemplary implementation, calibrator 405 may utilize a default calibration image. According to other exemplary implementations, calibrator 405 may utilize a user interface associated with normal operation of user device 105 (e.g., a desktop image, etc.).

According to an exemplary implementation, calibrator 405 may detect points associated with the projected image. For example, when the projected image has a shape of a four-sided figure (e.g., a square or a rectangle), calibrator 405 may detect corner points of the projected image received from camera 125. Additionally, or alternatively, the projected image may include distinctive focal points (e.g., colored spots on a white background, bright or illuminated spots, etc.) that calibrator 405 may detect. Calibrator 405 may utilize the detected points to calculate a translation between the coordinate space associated with the projected image and a coordinate space associated with the user interface of user device 105.

Cursor detector 410 may detect invisible cursor 135 (e.g., an invisible spot of light from pointer device 120). According to an exemplary implementation, cursor detector 410 may detect invisible cursor 135 based on its illumination level or its light intensity. That is, the illumination of invisible cursor 135 may be greater than the illumination associated with the projected image. Cursor detector 410 may compare the illumination of invisible cursor 135 with other illumination levels associated with coordinates of the projected image to determine the position of invisible cursor 135. Additionally, or alternatively, cursor detector 410 may detect invisible cursor 135 based on a frequency associated with the invisible light. For example, cursor detector 410 may use information about the frequency of the invisible light to filter out the spectrum of the projected image and detect invisible cursor 135. The size of invisible cursor 135 may also be used to detect invisible cursor 135 in combination with illumination level and/or frequency. Additionally, or alternatively, cursor detector 410 may detect invisible cursor 135 based on its movement. That is, the projected image may be relatively motionless or static whereas invisible cursor 135 may move due to the user's hand shaking, etc. Furthermore, in instances when the projected image includes a portion having an illumination level substantially the same as invisible cursor 135, cursor detector 410 may detect the position of invisible cursor 135 based on the movement of invisible cursor 135.

Cursor stabilizer 415 may stabilize the position of visible cursor 140 once the position of invisible cursor 135 is detected. For example, the position of invisible cursor 135 may be instable due to the unsteadiness of the user's hand. According to an exemplary implementation, cursor stabilizer 415 may comprise filters (e.g., Kalman filters or low-pass filters) to remove noise and provide an estimation of an intended position of invisible cursor 135 and to stabilize such a position. For example, a low-pass filter may operate between some range of values between 0Hz - 5Hz. Visible cursor 140 may correspondingly maintain a stable position.

Mapper 420 may map the position of invisible cursor 135 to the coordinate space associated with the user interface of user device 105. Mapper 420 may map the position of invisible cursor 135 based on translation information provided by calibrator 405.

Input manger 425 may interpret inputs received from pointer device 120. For example, as previously described, pointer device 120 may comprise input mechanisms (buttons, a scroll wheel, a switch, a touchpad, etc.). A user may perform various operations using these input mechanisms. By way of example, but not limited thereto, these operations may include selecting, scrolling, highlighting, dragging-and-dropping, navigating in a menu (e.g., within a pull-down menu), navigating within other portions of the user interface, and/or other operations associated with the user interface. Accordingly, the user may interact with a projected user interface and have available various operations corresponding to those provided by a mouse, single or multi-touch user interactions, or other types of input devices. Additionally, according to embodiments in which pointer device 120 comprises a gesture detector, input manager 425 may interpret a user's gestures with pointer device 120.

Cursor generator 430 may generate visible cursor 140. Cursor generator 430 may allow user to configure various characteristics (e.g., shape, design, size, and/or transparency) associated with visible cursor 140.

Although Fig. 4 illustrates exemplary functional components of user device 105, in other implementations, user device 105 may include fewer functional components, additional functional components, different functional components, and/or a different arrangement of functional components than those illustrated in Fig. 4 and described. For example, user device 105 may include a prediction component to predict the position of invisible cursor 135. According to an exemplary implementation, the prediction component may use previous invisible cursor 135 positions as a basis for identifying a user's navigational patterns. For example, a user may frequently access a particular application(s) or area of the user interface. The prediction component may minimize a lag time associated with detecting the position of invisible cursor 135 and paralleling its position with visible cursor 140.

According to another implementation, other prediction approaches may be used. For example, analysis of the projected images and/or other computations introduce a latency (e.g., a latency *t*), which corresponds to a time between detection of invisible cursor 1335 and presentation of visible cursor 140. User device 105 may use information about the speed and acceleration of invisible cursor 135 at current and previously detected points to make an extrapolation of where visible cursor 140 could be latency t later than when invisible cursor 135 is detected (i.e., when the cursor is presented to the user). By performing this prediction, user device 105 may provide a better estimate of the position of visible cursor 140 at the time when it is presented to the user. From the perspective of the user, the latency may be perceived as minimal. Understandably, the longer the latency *t* is, the greater the importance of the prediction. However, at frequencies, such as, for example, 50 Hz - 60 Hz, or above, the effect of the latency should be less and less perceivable by the user.

Additionally, or alternatively, one or more operations described as being performed by a particular functional component may be performed by one or more other functional components, in addition to or instead of the particular functional component, and/or one or more functional components may be combined.

### EXEMPLARY POINTER DEVICE

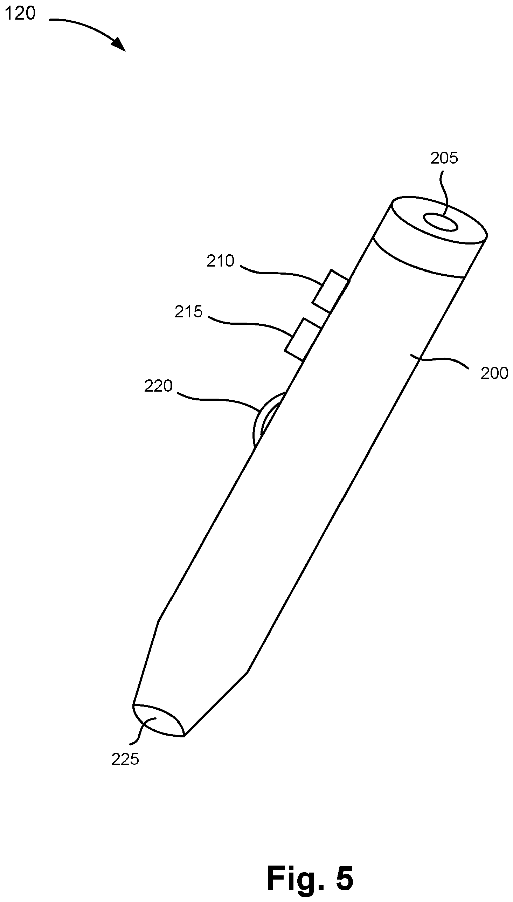

Fig. 5 is a diagram illustrating an exemplary pointer device 120. As illustrated, pointer device 120 may comprise a housing 200, a switch 205, buttons 210 and 215, a scroll wheel 220, and a portal 225. In other embodiments, pointer device 120 may comprise fewer components, additional components, different components, and/or a different arrangement of components than those illustrated in Fig. 5 and described herein. For example, in other embodiments, pointer device 120 may not comprise scroll wheel 220.

Housing 200 may comprise a structure capable of encasing components and supporting components of pointer device 120. For example, housing 200 may be formed from plastic, metal, or some other type of material. Housing 200 may be formed of any shape and/or design. For example, housing 200 is illustrated as having a pen-like shape.

Switch 205 may turn on and turn off pointer device 120. For example, a user may rotate switch 205 to on and off positions. Button 210, button 215, and scroll wheel 220 may comprise a component capable of providing input into pointer device 120. For example, buttons 210 and 215 may permit a user to perform various operations, such as selecting, highlighting, dragging-and-dropping, and/or navigating. Buttons 210 and 215 may also cause user device 105 to operate in different modes. For example, user device 105 may operate in a single touch mode or a multi-touch mode. Scroll wheel 220 may permit a user to scroll. Portal 225 may permit a light (e.g., a laser light or some other light) to emit from pointer device 120.

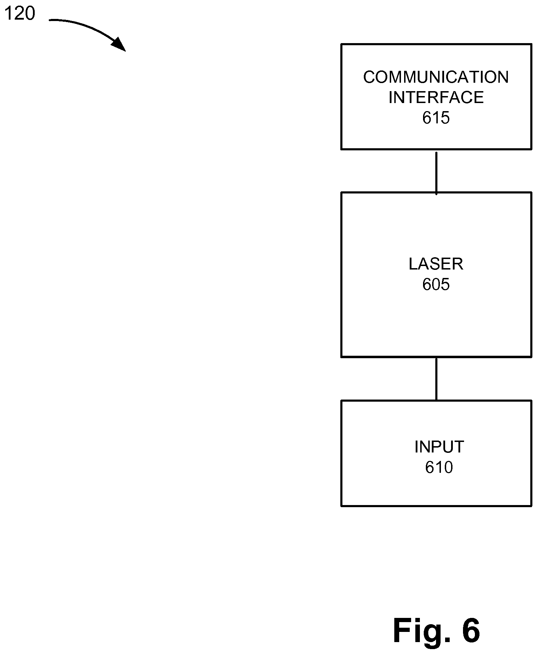

Fig. 6 is a diagram illustrating exemplary components of pointer device 120. As illustrated, pointer device 120 may comprise a laser 605, input 610, and a communication interface 615. In other embodiments, pointer device 120 may comprise fewer components, additional components, different components, or a different arrangement of components than those illustrated in Fig. 6 and described herein. For example, pointer device 120 may not correspond to a laser device but some other type of device (e.g., a flashlight).

Laser 605 may comprise laser circuitry to generate a laser beam. For example, laser 605 may comprise a laser diode. According to an exemplary implementation, the laser diode may correspond to an IR laser diode. In other implementations, the laser diode may correspond to an ultraviolet laser diode. Laser 605 may also comprise a controller and a power source (not illustrated).

Input 610 may permit an input into pointer device 120. For example, input 610 may comprise buttons 210 and 215 and scroll wheel 220, an input port, and/or some other type input component.

Communication interface 615 may permit pointer device 120 to communicate with other devices. For example, communication interface 615 may comprise a wireless communication interface and/or a wired communication interface. By way of example, but not limited thereto, communication interface 615 may comprise a radio interface, a microwave interface, a USB interface, or some other type of wireless communication interface and/or wired communication interface. Communication interface 615 may comprise a transmitter, a receiver, and/or a transceiver. Communication interface 615 may operate according to various protocols, standards, or the like.

As previously described a user may perform various operations (e.g., selecting, scrolling, highlighting, dragging-and-dropping, navigating, etc.) based on input 610 of pointer device 120. Additionally, the user may cause user device 105 to operate in various modes based on the user's input. For example, the user may perform multi-touch type operations according to particular inputs and/or gestures.

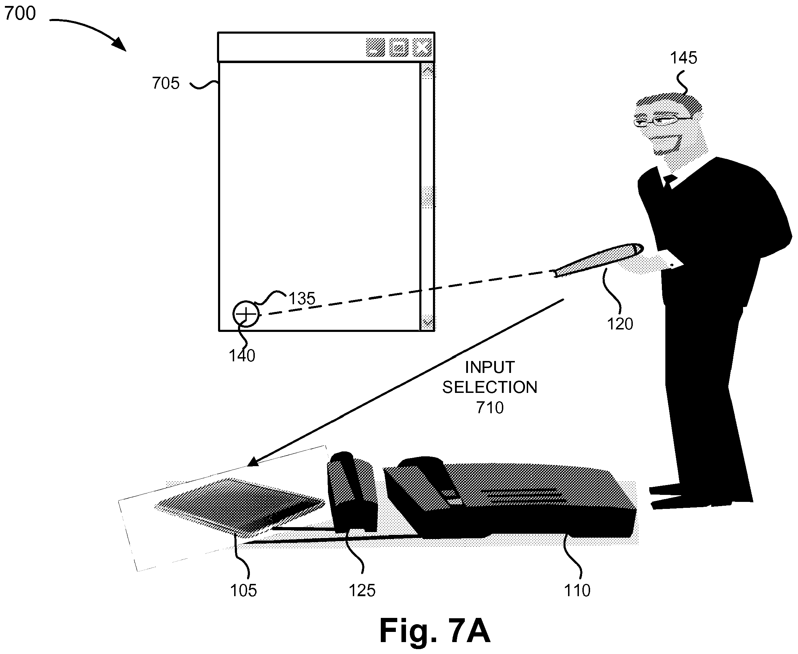

Figs. 7A - 7C are diagrams illustrating an exemplary scenario in which multi-touch operations may be performed utilizing pointer device 120 and user device 105. Referring to Fig. 7A, a projected page 705 is displayed. User 145 may press one of buttons 210 or 215 while positioning invisible cursor 135 and visible cursor 140 somewhere on projected page 705. The press may include a particular pressure, duration, number of pressings, etc. As illustrated in Fig. 7A, pointer device 120 may send an input selection 710 to user device 105.

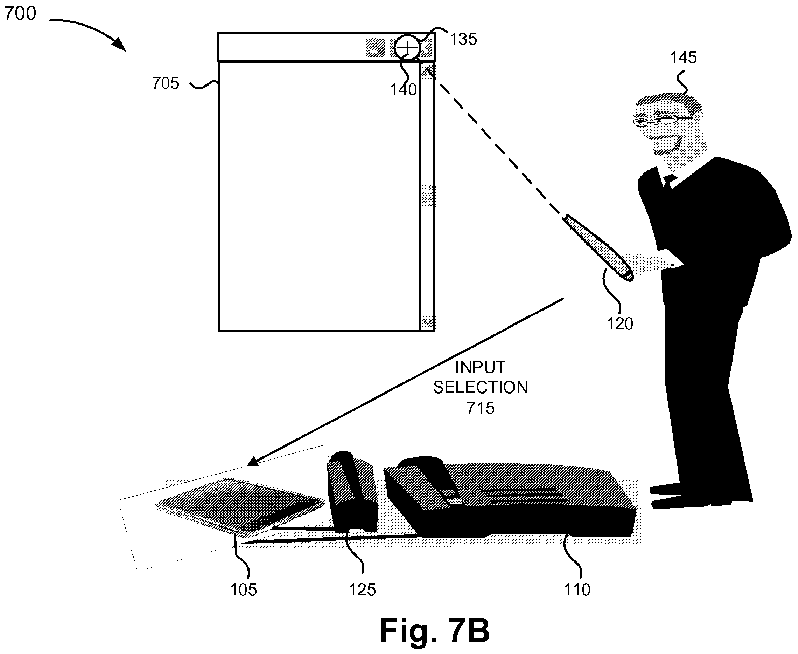

Referring to Fig. 7B, user may press one of buttons 210 or 215 while positioning invisible cursor 135 and visible cursor 140 somewhere on projected page 705. The press may include a particular pressure, duration, number of pressings, etc. As illustrated in Fig. 7B, pointer device 120 may send an input selection 715 to user device 105.

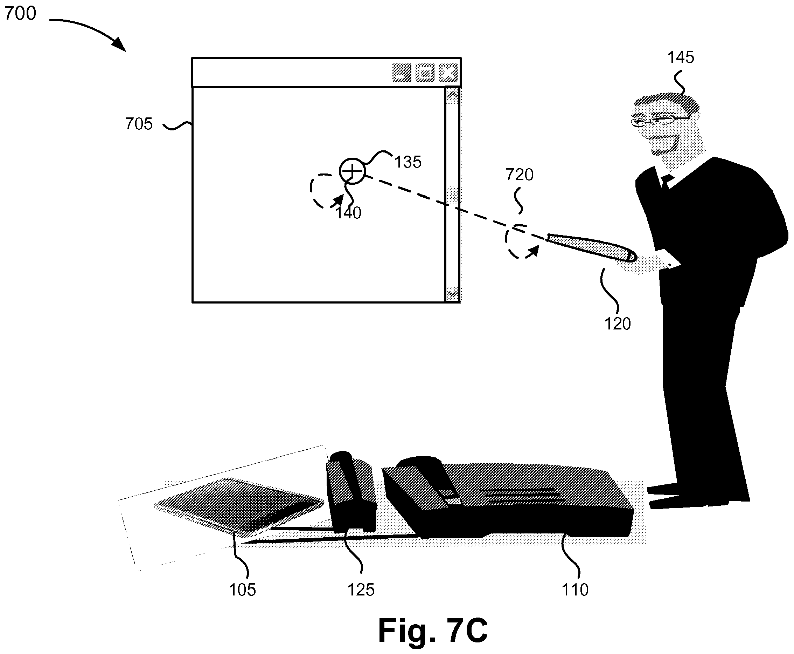

In this instance, based on the previous input selections 710 and/or 715, user device 105 may operate in a multi-touch mode. Referring to Fig. 7C, user 145 may position invisible cursor 135 and visible cursor 140 somewhere on projected page 705 and make a rotation gesture 720 (e.g., counterclockwise), which may cause projected page 705 to correspondingly rotate. According to an exemplary implementation, cursor detector 410 of user device 105 may recognize the gesture associated with invisible cursor 135 (and visible cursor 140) (e.g., an arcing positional path of invisible cursor 135 (and visible cursor 140)) and provide this gesture information to input manager 425 so as to cause projected page 705 to correspondingly rotate. According to other exemplary embodiments, when pointer device 120 comprises an accelerometer and/or a gyroscope, pointer 120 may send an input selection (e.g., gesture information) to user device 105.

Other types of multi-touch type operations may be performed in a manner similar to that described above. For example, user 145 may enlarge or reduce a page, a window, an object, etc., grab multiple pages, windows, objects, etc., zoom-in, zoom-out, etc. In an alternative scenario, user 145 may utilize multiple pointer devices 120 simultaneously to mimic a multi-touch interface. Under such circumstances, user device 105 may detect multiple invisible cursors 135, generate multiple visible cursors 140, and respond to multi-touch operations performed by user 105. Additionally, or alternatively, pressure detectors associated with buttons 210 and/or 215 may allow user 145 to enter a variety of input commands. According to an exemplary implementation, the pressure applied by user 145 may regulate a level of luminosity (e.g., the greater the pressure - the greater the luminosity of the light) emitted from pointer device 120. Additionally, the pressure parameter may be coupled with other parameters (e.g., duration of press, number of presses, button sequences, etc.) to allow user 145 to perform multi-touch operations without necessarily requiring user 145 to select multiple portions (e.g., areas) of the projected user interface.

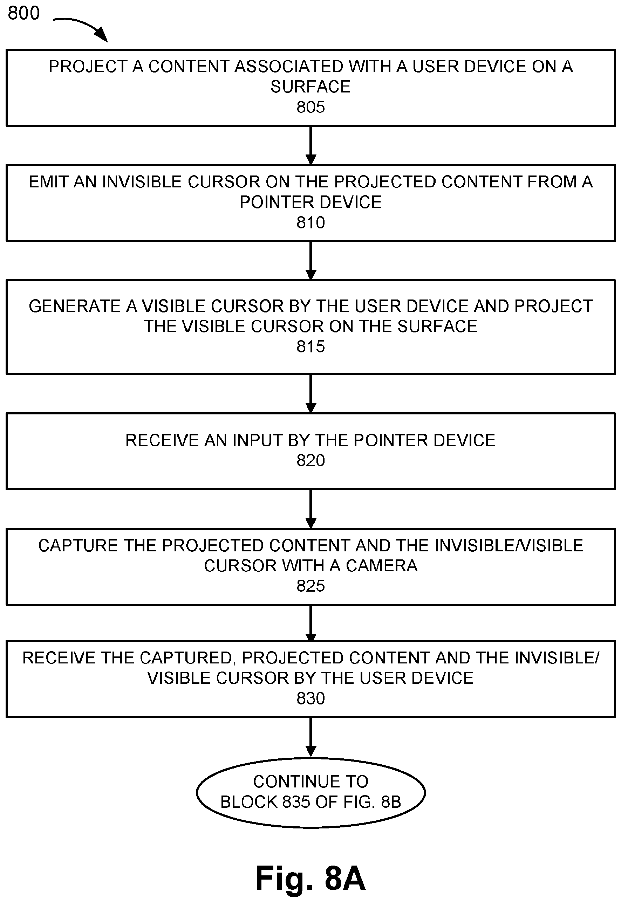

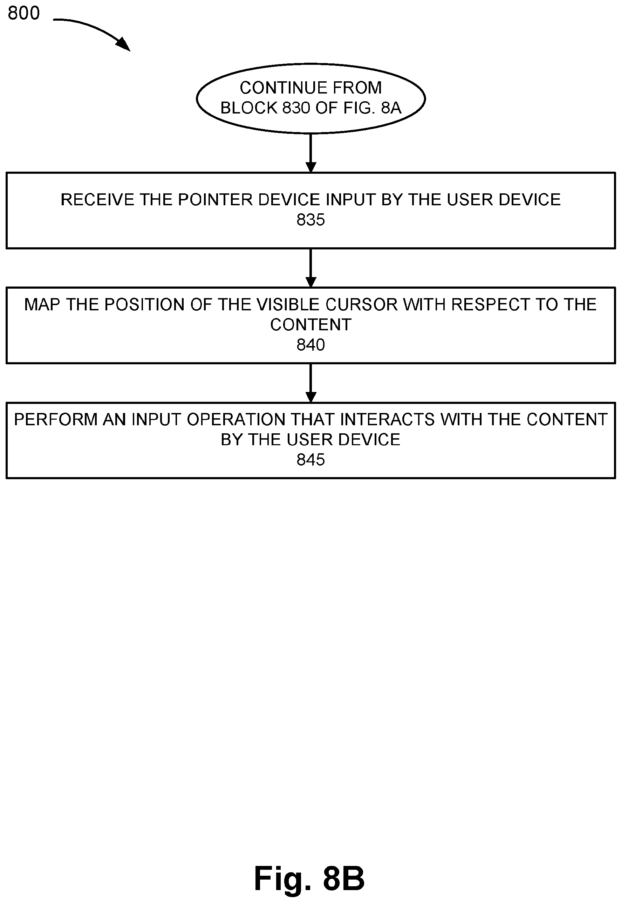

Figs. 8A and 8B are flow diagrams illustrating an exemplary process 800 for providing user navigation via a projected user interface and a pointer device. According to an exemplary implementation, process 800 may be performed by user device 105, projector 110, pointer device 120, and camera 125. As previously described, projector 110 and/or camera 125 may be internal to or external from user device 105. Process 800 is described with the assumption that a calibration process has been successfully completed.

Process 800 may include projecting a content associated with a user device on a surface (block 805). For example, projector 110 may project a user interface associated with user device 105 on a surface (e.g., screen 115, a wall, etc.).

An invisible cursor may be emitted from a pointer device on the projected content (block 810). For example, pointer device 120 may be pointed towards the projected content causing invisible cursor 135 (e.g., an invisible spot) to be positioned on the projected content. According to an exemplary implementation, pointer device 120 may emit an IR laser beam. In other implementations, pointer device 120 may emit some other type of laser beam (e.g. ultraviolet beam) or light that is invisible to the human eye and does not create a visible cursor.

A visible cursor may be generated by the user device and the visible cursor may be projected on the surface (block 815). For example, camera 125 may capture the projected content that includes invisible cursor 135, and provide this image to user device 105. User device 105 (e.g., cursor generator 430) may generate visible cursor 140 and projector 110 may project visible cursor 140 on the projected content. As previously described, user device 105 (e.g., cursor detector 410, cursor stabilizer 415) may determine the position of invisible cursor 135. As previously described, visible cursor 140 may appear on the projected content in a position that corresponds to or is substantially the same as the position of invisible cursor 135. User device 105 (e.g., mapper 420) may map the appropriate coordinates to the coordinate spaces associated with the projected content and the content associated with user device 105.

An input may be received by the pointer device (block 820). For example, pointer device 120 may receive a user input via button 210, button 215, and/or scroll wheel 220. As previously described, the user input may correspond to selecting, highlighting, a multi-touch type operation, etc.

The projected content and the invisible/visible cursor may be captured by a camera (block 825). For example, camera 125 may capture the image of the projected content, invisible cursor 135, and visible cursor 140.

The projected content and the cursor may be received by the user device (block 830). For example, camera 125 may provide the image associated with the projected content, invisible cursor 135, and visible cursor 140 to user device 105.

Referring to Fig. 8B, the pointer device input may be received by the user device (block 835). For example, user device 105 may receive the user input from pointer device 120. According to an exemplary implementation, user device 105 (e.g., input manager 425) may interpret the user input from pointer device 120. As previously described, the user inputs may include selecting, scrolling, etc.

The position of the visible cursor with respect to the content may be mapped (block 840). For example, user device 105 may map the position visible cursor 140 to the content associated user device 105. According to an exemplary implementation, mapper 420 of user device 105 may map the position of visible cursor 140 to the coordinate space associated with user device 105 based on translation information provided by calibrator 405 during a calibration process.

An input operation that interacts with the content may be performed by the user device (block 845). For example, user device 105 may perform an input operation (e.g., selecting, highlighting, scrolling, a multi-touch operation, etc.) that interacts with the content.

Although Figs. 8A and 8B illustrate an exemplary process 800 for, in other implementations, process 800 may include additional operations, fewer operations, and/or different operations than those illustrated and described with respect to Figs. 8A and 8B. Additionally, depending on the components of user device 105, pointer device 120, and/or camera 125, process 800 may be modified such that some functions described as being performed by a particular device may be performed by another device. In addition, while a series of blocks has been described with regard to process 800 illustrated in Figs. 8A and 8B, the order of the blocks may be modified in other implementations. Further, non-dependent blocks may be performed in parallel.

### CONCLUSION

The foregoing description of implementations provides illustration, but is not intended to be exhaustive or to limit the implementations to the precise form disclosed. Modifications and variations are possible in light of the above teachings or may be acquired from practice of the teachings.

The terms "comprise," "comprises," "comprising," as well as synonyms thereof (e.g., include, etc.), when used in the specification is taken to specify the presence of stated features, integers, steps, or components but does not preclude the presence or addition of one or more other features, integers, steps, components, or groups thereof. In other words, these terms mean inclusion without limitation.

The article "a," "an," and "the" are intended to mean one or more items. Further, the phrase "based on" is intended to mean "based, at least in part, on" unless explicitly stated otherwise. The term "and/or" is intended to mean any and all combinations of one or more of the listed items.

Further certain features described above may be implemented as "logic" or a "component" that performs one or more functions. This logic or component may include hardware, such as processing system (e.g., one or more processors, one or more microprocessors, one or more ASICs, one or more FPGAs, etc.,), a combination of hardware and software (e.g., applications 315), or a combination with firmware, etc.

No element, act, or instruction used in the present application should be construed as critical or essential to the implementations described herein unless explicitly described as such.

## Claims

1. A method comprising:
projecting a content associated with a user device (105) onto a surface;
projecting, by a pointer device (120) using invisible light, an invisible cursor (135) onto the projected content;
receiving, by the user device (105), an image of the projected content including an image of an invisible cursor content of the invisible cursor (135);
determining a position of the invisible cursor content with respect to the projected content;
outputting, by the user device (105), the content and a visible cursor (140) having a position in correspondence to the invisible cursor (135);
projecting the content and the visible cursor (140) onto the surface;
receiving, by the user device (105), an input from the pointer device (120);
mapping, by the user device (105), the position of the visible cursor (140) to the content; and
performing, by the user device (105), an input operation that interacts with the content and corresponds to the input from the pointer device (120) and the position of the visible cursor (140);
wherein when determining the position of the invisible cursor content with respect to the projected content, the method further comprising detecting a size associated with the invisible cursor (135) and at least one of an illumination level associated with the invisible cursor content, and a frequency associated with the invisible light, and using the size in combination with the illumination level and/or the frequency to detect the invisible cursor (135).

2. The method of claim 1, further comprising:
receiving, by the pointer device (120), the input; and
transmitting, by the pointer device (120), the input to the user device (105), wherein the pointer device (120) corresponds to an infrared laser pointer device.

3. The method of claim 1, wherein the determining comprises:
detecting an illumination level associated with the invisible cursor content; and
comparing the illumination level with other illumination levels associated with coordinates of the projected content.

4. The method of claim 1, further comprising:
performing a calibration to calculate a translation between a coordinate space associated with the projected content and a coordinate space associated with the content.

5. The method of claim 4, wherein the mapping comprises:
mapping one or more coordinates of the position of the invisible cursor content to a corresponding one or more coordinates of the content.

6. The method of claim 1, further comprising:
outputting, by the user device (105), a calibration image, wherein the content corresponds to one of a user interface of the user device (105) or content accessible by the user device (105).

7. The method of claim 1, wherein the determining comprises:
recognizing a user's gesture based on a positional path associated with the invisible cursor content, wherein the input operation corresponds to one of scrolling, selecting, highlighting, dragging-and-dropping, a multi-touch operation, or navigating within a menu.

8. A user device (105) comprising components configured to:
receive an image of a projected content including an image of an invisible cursor content of the invisible cursor (135), wherein the projected content is projected onto a surface and corresponds to a content associated with the user device (105), and wherein the invisible cursor (135) is projected by a pointer device (120) using invisible light;
determine a position of the invisible cursor content with respect to the projected content;
output the content and a visible cursor (140) having a position in correspondence to the invisible cursor (135);
receive a user input from the pointer device (120);
map the position of the visible cursor (140) to the content; and
perform an input operation that interacts with the content, wherein the input operation corresponds to the user input and the position of visible cursor (140);
wherein when determining the position of the invisible cursor content with respect to the projected content, the components are further configured to detect a size associated with the invisible cursor (135) and at least one of an illumination level associated with the invisible cursor content and a frequency associated with the invisible light, and the components are further configured to use the size in combination with the illumination level and/or the frequency to detect the invisible cursor (135).

9. The user device of claim 8, further comprising:
a radio telephone; and
a display capable of displaying the content.

10. The user device of claim 8, further comprising at least one of a projector or a camera capable of detecting infrared light and visible light, and wherein the visible cursor (140) is partially transparent.

11. The user device of claim 8, wherein when determining, the components are further configured to:
detect at least one of an illumination level associated with the invisible cursor content, a frequency associated with the invisible cursor content, or a positioning path associated with the invisible

12. The user device of claim 8, wherein the components are further configured to:
remove noise based on a Kalman filter or a low-pass filter to stabilize the position of the visible cursor (140).

13. The user device of claim 8, wherein the components are further configured to:
receive a projected content corresponding to a calibration image; and
map a coordinate space between the projected content corresponding to the calibration image and a content associated with the user device (105).

14. The user device of claim 8, wherein the input operation corresponds to one of scrolling, selecting, highlighting, dragging-and-dropping, a multi-touch operation, or navigating within a menu.

15. The user device of claim 8, wherein the content corresponds to one of a user interface of the user device (105) or content accessible by the user device (105), and the components are further configured to:
detect at least one of an illumination level associated with the invisible cursor content or a frequency associated with the invisible cursor content, in combination with a size of the invisible cursor content; and
filter a spectrum associated with the received projected content based on the frequency.

## Patentansprüche

1. Verfahren, umfassend:
Projizieren eines Inhalts in Verbindung mit einem Benutzergerät (105) auf eine Oberfläche;
Projizieren eines unsichtbaren Cursors (135) auf den projizierten Inhalt durch eine Zeigevorrichtung (120) unter Verwendung von unsichtbarem Licht;
Empfangen eines Bildes des projizierten Inhalts durch das Benutzergerät (105), beinhaltend ein Bild eines unsichtbaren Cursor-Inhalts des unsichtbaren Cursors (135);
Bestimmen einer Position des unsichtbaren Cursor-Inhalts in Bezug auf den projizierten Inhalt;
Ausgeben des Inhalts und eines sichtbaren Cursors (140), der eine Position entsprechend dem unsichtbaren Cursor (135) aufweist, durch das Benutzergerät (105);
Projizieren des Inhalts und des sichtbaren Cursors (140) auf die Oberfläche;
Empfangen einer Eingabe von der Zeigevorrichtung (120) durch das Benutzergerät (105);
Zuordnen der Position des sichtbaren Cursors (140) zu dem Inhalt durch das Benutzergerät (105); und
Durchführen eines Eingabevorgangs, der mit dem Inhalt interagiert und der Eingabe von der Zeigevorrichtung (120) und der Position des sichtbaren Cursors (140) entspricht, durch das Benutzergerät (105);
wobei, wenn die Position des unsichtbaren Cursor-Inhalts in Bezug auf den projizierten Inhalt bestimmt wird, das Verfahren ferner das Erfassen einer Größe in Verbindung mit dem unsichtbaren Cursor (135) und von zumindest einem von einem Beleuchtungsgrad in Verbindung mit dem unsichtbaren Cursor-Inhalt und einer Frequenz in Verbindung mit dem unsichtbaren Licht und das Verwenden der Größe in Kombination mit dem Beleuchtungsgrad und/oder der Frequenz umfasst, um den unsichtbaren Cursor (135) zu erfassen.

2. Verfahren nach Anspruch 1, ferner umfassend:
Empfangen der Eingabe durch die Zeigevorrichtung (120); und
Übertragen der Eingabe an das Benutzergerät (105) durch die Zeigevorrichtung (120), wobei die Zeigevorrichtung (120) einer Infrarotlaserzeigevorrichtung entspricht.

3. Verfahren nach Anspruch 1, wobei das Bestimmen Folgendes umfasst:
Erfassen eines Beleuchtungsgrads in Verbindung mit dem unsichtbaren Cursor-Inhalt; und
Vergleichen des Beleuchtungsgrads mit anderen Beleuchtungsgraden in Verbindung mit Koordinaten des projizierten Inhalts.

4. Verfahren nach Anspruch 1, ferner umfassend:
Durchführen einer Kalibrierung, um eine Translation zwischen einem Koordinatenraum in Verbindung mit dem projizierten Inhalt und einem Koordinatenraum in Verbindung mit dem Inhalt zu berechnen.

5. Verfahren nach Anspruch 4, wobei das Zuordnen Folgendes umfasst:
Zuordnen einer oder mehrerer Koordinaten der Position des unsichtbaren Cursor-Inhalts zu (einer) entsprechenden einen oder mehreren Koordinaten des Inhalts.

6. Verfahren nach Anspruch 1, ferner umfassend:
Ausgeben eines Kalibrierbildes durch das Benutzergerät (105), wobei der Inhalt einem von einer Benutzerschnittstelle des Benutzergeräts (105) oder Inhalt, der durch das Benutzergerät (105) zugänglich ist, entspricht.

7. Verfahren nach Anspruch 1, wobei das Bestimmen Folgendes umfasst:
Erkennen der Geste eines Benutzers auf Grundlage einer Positionsstrecke in Verbindung mit dem unsichtbaren Cursor-Inhalt, wobei der Eingabevorgang einem von Scrollen, Auswählen, Hervorheben, Drag-and-Drop, einem Vorgang mit mehreren Berührungen oder Navigieren innerhalb eines Menüs entspricht.

8. Benutzergerät (105), umfassend Komponenten, die für Folgendes konfiguriert sind:
Empfangen eines Bildes eines projizierten Inhalts, beinhaltend ein Bild eines unsichtbaren Cursor-Inhalts des unsichtbaren Cursors (135), wobei der projizierte Inhalt auf eine Oberfläche projiziert wird und einem Inhalt in Verbindung mit dem Benutzergerät (105) entspricht, und wobei der unsichtbare Cursor (135) durch eine Zeigevorrichtung (120) unter Verwendung von unsichtbarem Licht projiziert wird;
Bestimmen einer Position des unsichtbaren Cursor-Inhalts in Bezug auf den projizierten Inhalt;
Ausgeben des Inhalts und eines sichtbaren Cursors (140), der eine Position entsprechend dem unsichtbaren Cursor (135) aufweist;
Empfangen einer Benutzereingabe von der Zeigevorrichtung (120);
Zuordnen der Position des sichtbaren Cursors (140) zu dem Inhalt; und
Durchführen eines Eingabevorgangs, der mit dem Inhalt interagiert, wobei der Eingabevorgang der Benutzereingabe und der Position des sichtbaren Cursors (140) entspricht;
wobei, wenn die Position des unsichtbaren Cursor-Inhalts in Bezug auf den projizierten Inhalt bestimmt wird, die Komponenten ferner konfiguriert sind, um eine Größe in Verbindung mit dem unsichtbaren Cursor (135) und zumindest eines von einem Beleuchtungsgrad in Verbindung mit dem unsichtbaren Cursor-Inhalt und einer Frequenz in Verbindung mit dem unsichtbaren Licht zu erfassen, und die Komponenten ferner konfiguriert sind, um die Größe in Kombination mit dem Beleuchtungsgrad und/oder der Frequenz zu verwenden, um den unsichtbaren Cursor (135) zu erfassen.

9. Benutzergerät nach Anspruch 8, ferner umfassend:
ein Funktelefon; und
eine Anzeige, die in der Lage ist, den Inhalt anzuzeigen.

10. Benutzergerät nach Anspruch 8, ferner umfassend zumindest eines von einem Projektor oder einer Kamera, der/die in der Lage ist, Infrarotlicht und sichtbares Licht zu erfassen, und wobei der sichtbare Cursor (140) teilweise transparent ist.

11. Benutzergerät nach Anspruch 8, wobei die Komponenten beim Bestimmen ferner für Folgendes konfiguriert sind:
Erfassen von zumindest einem von einem Beleuchtungsgrad in Verbindung mit dem unsichtbaren Cursor-Inhalt, einer Frequenz in Verbindung mit dem unsichtbaren Cursor-Inhalt oder einer Positionierungsstrecke in Verbindung mit dem unsichtbaren Cursor-Inhalt.

12. Benutzergerät nach Anspruch 8, wobei die Komponenten ferner für Folgendes konfiguriert sind:
Entfernen von Rauschen auf Grundlage eines Kalman-Filters oder eines Tiefpassfilters, um die Position des sichtbaren Cursors (140) zu stabilisieren.

13. Benutzergerät nach Anspruch 8, wobei die Komponenten ferner für Folgendes konfiguriert sind:
Empfangen eines projizierten Inhalts entsprechend eines Kalibrierbildes; und
Zuordnen eines Koordinatenraums zwischen dem projizierten Inhalt entsprechend dem Kalibrierbild und einem Inhalt in Verbindung mit dem Benutzergerät (105).

14. Benutzergerät nach Anspruch 8, wobei der Eingabevorgang einem von Scrollen, Auswählen, Hervorheben, Drag-and-Drop, einem Vorgang mit mehreren Berührungen oder Navigieren innerhalb eines Menüs entspricht.

15. Benutzergerät nach Anspruch 8, wobei der Inhalt einem von einer Benutzerschnittstelle des Benutzergeräts (105) oder Inhalt, der durch das Benutzergerät (105) zugänglich ist, entspricht, und die Komponenten ferner für Folgendes konfiguriert sind:
Erfassen von zumindest einem von einem Beleuchtungsgrad in Verbindung mit dem unsichtbaren Cursor-Inhalt oder einer Frequenz in Verbindung mit dem unsichtbaren Cursor-Inhalt, in Kombination mit einer Größe des unsichtbaren Cursor-Inhalts; und
Filtern eines Spektrums in Verbindung mit dem empfangenen projizierten Inhalt auf Grundlage der Frequenz.

## Revendications

1. Procédé comprenant :
la projection d'un contenu associé à un dispositif utilisateur (105) sur une surface ;
la projection, par un dispositif de pointage (120) utilisant une lumière invisible, d'un curseur invisible (135) sur le contenu projeté ;
la réception, par le dispositif utilisateur (105), d'une image du contenu projeté comportant une image d'un contenu de curseur invisible du curseur invisible (135) ;
la détermination d'une position du contenu de curseur invisible par rapport au contenu projeté ;
la génération, par le dispositif utilisateur (105), du contenu et d'un curseur visible (140) ayant une position correspondant au curseur invisible (135) ;
la projection du contenu et du curseur visible (140) sur la surface ;
la réception, par le dispositif utilisateur (105), d'une entrée provenant du dispositif de pointage (120) ;
la mise en correspondance, par le dispositif utilisateur (105), de la position du curseur visible (140) avec le contenu ; et
la mise en oeuvre, par le dispositif utilisateur (105), d'une opération d'entrée qui interagit avec le contenu et correspond à l'entrée provenant du dispositif de pointage (120) et à la position du curseur visible (140) ;
dans lequel, lors de la détermination de la position du contenu de curseur invisible par rapport au contenu projeté, le procédé comprenant en outre la détection d'une taille associée au curseur invisible (135) et d'au moins l'un d'un niveau d'éclairage associé au contenu de curseur invisible, et d'une fréquence associée à la lumière invisible, et l'utilisation de la taille en combinaison avec le niveau d'éclairage et/ou la fréquence pour détecter le curseur invisible (135).

2. Procédé selon la revendication 1, comprenant en outre :
la réception, par le dispositif de pointage (120), de l'entrée ; et
la transmission, par le dispositif de pointage (120), de l'entrée au dispositif utilisateur (105), dans lequel le dispositif de pointage (120) correspond à un dispositif de pointage à laser infrarouge.

3. Procédé selon la revendication 1, dans lequel la détermination comprend :
la détection d'un niveau d'éclairage associé au contenu de curseur invisible ; et
la comparaison du niveau d'éclairage avec d'autres niveaux d'éclairage associés à des coordonnées du contenu projeté.

4. Procédé selon la revendication 1, comprenant en outre :
la mise en oeuvre d'un étalonnage pour calculer une translation entre un espace de coordonnées associé au contenu projeté et un espace de coordonnées associé au contenu.

5. Procédé selon la revendication 4, dans lequel la mise en correspondance comprend :
la mise en correspondance d'une ou de plusieurs coordonnées de la position du contenu de curseur invisible avec une ou plusieurs coordonnées correspondantes du contenu.

6. Procédé selon la revendication 1, comprenant en outre :
la génération, par le dispositif utilisateur (105), d'une image d'étalonnage, dans lequel le contenu correspond à l'un d'une interface utilisateur du dispositif utilisateur (105) ou d'un contenu accessible par le dispositif utilisateur (105).

7. Procédé selon la revendication 1, dans lequel la détermination comprend :
la reconnaissance d'un geste de l'utilisateur sur la base d'un chemin de positionnement associé au contenu de curseur invisible, dans lequel l'opération d'entrée correspond à l'un du défilement, de la sélection, de la surbrillance, du glisser-déposer, d'une opération tactile multipoint ou de la navigation à l'intérieur d'un menu.

8. Dispositif utilisateur (105) comprenant des composants configurés pour :
recevoir une image d'un contenu projeté comportant une image d'un contenu de curseur invisible du curseur invisible (135), dans lequel le contenu projeté est projeté sur une surface et correspond à un contenu associé au dispositif utilisateur (105), et dans lequel le curseur invisible (135) est projeté par un dispositif de pointage (120) utilisant une lumière invisible ;
déterminer une position du contenu de curseur invisible par rapport au contenu projeté ;
générer le contenu et un curseur visible (140) ayant une position en correspondance avec le curseur invisible (135) ;
recevoir une entrée utilisateur provenant du dispositif de pointage (120) ;
mettre en correspondance la position du curseur visible (140) avec le contenu ; et
mettre en oeuvre une opération d'entrée qui interagit avec le contenu, dans lequel l'opération d'entrée correspond à l'entrée utilisateur et à la position de curseur visible (140) ;
dans lequel, lors de la détermination de la position du contenu de curseur invisible par rapport au contenu projeté, les composants sont en outre configurés pour détecter une taille associée au curseur invisible (135) et au moins l'un d'un niveau d'éclairage associé au contenu de curseur invisible et d'une fréquence associée à la lumière invisible, et les composants sont en outre configurés pour utiliser la taille en combinaison avec le niveau d'éclairage et/ou la fréquence pour détecter le curseur invisible (135).

9. Dispositif utilisateur selon la revendication 8, comprenant en outre :
un radiotéléphone ; et
un écran capable d'afficher le contenu.

10. Dispositif utilisateur selon la revendication 8, comprenant en outre au moins l'un d'un projecteur ou d'une caméra capable de détecter une lumière infrarouge et une lumière visible, et dans lequel le curseur visible (140) est partiellement transparent.

11. Dispositif utilisateur selon la revendication 8, dans lequel lors de la détermination, les composants sont en outre configurés pour :
détecter au moins l'un d'un niveau d'éclairage associé au contenu de curseur invisible, d'une fréquence associée au contenu de curseur invisible ou d'un chemin de positionnement associé au contenu de curseur invisible.

12. Dispositif utilisateur selon la revendication 8, dans lequel les composants sont en outre configurés pour :
supprimer le bruit sur la base d'un filtre de Kalman ou d'un filtre passe-bas pour stabiliser la position du curseur visible (140) .

13. Dispositif utilisateur selon la revendication 8, dans lequel les composants sont en outre configurés pour :
recevoir un contenu projeté correspondant à une image d'étalonnage ; et
mettre en correspondance un espace de coordonnées entre le contenu projeté correspondant à l'image d'étalonnage et un contenu associé au dispositif utilisateur (105).

14. Dispositif utilisateur selon la revendication 8, dans lequel l'opération d'entrée correspond à l'un du défilement, de la sélection, de la surbrillance, du glisser-déposer, d'une opération tactile multipoint ou de la navigation à l'intérieur d'un menu.

15. Dispositif utilisateur selon la revendication 8, dans lequel le contenu correspond à l'un d'une interface utilisateur du dispositif utilisateur (105) ou d'un contenu accessible par le dispositif utilisateur (105), et les composants sont en outre configurés pour :
détecter au moins l'un d'un niveau d'éclairage associé au contenu de curseur invisible ou d'une fréquence associée au contenu de curseur invisible, en combinaison avec une taille du contenu de curseur invisible ; et
filtrer un spectre associé au contenu projeté reçu sur la base de la fréquence.
